# EUROPÄISCHE PATENTSCHRIFT

(11) **EP 2 501 952 B1**
(45) Veröffentlichungstag und Bekanntmachung des Hinweises auf die Patenterteilung: **20.11.2013**
(21) Anmeldenummer: 10773000.4
(22) Anmeldetag: 13.10.2010
(51) Int. Cl.: F16D 48/06, F16H 63/50

(54) **VERFAHREN ZUM BETÄTIGEN EINER KUPPLUNG**
METHOD FOR ACTUATING A CLUTCH
PROCÉDÉ POUR L'ACTIONNEMENT D'UN ACCOUPLEMENT

(30) Priorität: 19.11.2009 DE 102009046863
(43) Veröffentlichungstag der Anmeldung: 26.09.2012
(73) Patentinhaber: ZF Friedrichshafen AG, 88038 Friedrichshafen (DE)
(72) Erfinder: STEINBORN, Mario, 88046 Friedrichshafen (DE); HERTER, Peter, 88212 Ravensburg (DE); BITZER, Franz, 88048 Friedrichshafen (DE); PETZOLD, Rainer, 88045 Friedrichshafen (DE)
(86) Internationale Anmeldenummer: PCT/EP2010/065307
(87) Internationale Veröffentlichungsnummer: WO 2011/061012

(56) Entgegenhaltungen:
- WO-A1-2005/058629
- WO-A1-2006/110945
- WO-A2-2004/033246
- DE-A1- 19 924 501
- DE-A1-102007 032 994

## Beschreibung

Die vorliegende Erfindung betrifft ein Verfahren zum Betätigen einer Durchschaltkupplung gemäß der im Oberbegriff des Patentanspruches 1 näher definierten Art.

Aus der Fahrzeugtechnik sind Funktionen und Verfahren zum Öffnen und Schließen einer Reibungskupplung bei Fahrt zur Durchführung von Schaltvorgängen bekannt. Eines der wesentlichen Qualitätsziele dieser Kupplungsvorgänge ist es, Getriebeschaltungen bei möglichst geringem Restdrehmoment im Antriebsstrang durchführen zu können. Ein Öffnen der Kupplung bei Vorliegen eines Restdrehmoments führt nämlich zu einer subjektiv schlechteren Bewertung und zu Schwingungen im Antriebsstrang, die eine nachfolgende Schaltung negativ beeinflussen. Prinzipiell wird versucht, eine Trennung des Antriebstrangs im Drehmoment-Nulldurchgang zu erreichen. Zum einen kann dies durch eine Beeinflussung des Motordrehmoments und zum anderen durch eine geeignete Ansteuerung der Kupplung erreicht werden. Dabei wird versucht, durch eine geschickte Überschneidung der beiden Vorgänge einen Drehmomentstoß im Antriebsstrang so gering wie möglich zu halten.

Diese überschneidende Ansteuerung von Motordrehmoment und Öffnen der Reibungskupplung ist relativ schwer zu beherrschen, weil der Vorgang im Wesentlichen von zwei Einflussfaktoren abhängig ist, die durch eine Auswertung der im Fahrzeug vorhandenen Sensorsignale nur ungenau bestimmt werden können. Zum einen von dem aktuellen Reibwert der Reibungskupplung, der unter anderem temperaturabhängig ist, und zum anderen von dem im Antriebsstrang noch vorhandenen Restdrehmoment. Zudem ergibt sich das Problem, dass die Wegsteuerung der Reibungskupplung relativ träge ist.

Vor allem an Steigungen ist das Zeitfenster, bis nach einem Zugmoment im Antriebsstrang ein Schubmoment entsteht, relativ kurz. Demzufolge müssen an die Ansteuerung einer Reibungskupplung und an die Reibungskupplung selbst sehr hohe Anforderungen gestellt werden.

Als Durchschaltkupplung soll in der vorliegenden Anmeldung eine Kupplung verstanden werden, die während einer Rutschphase als Reibungskupplung ausgeführt ist, während in Phasen, in denen das Rutschen der Kupplung nicht gewünscht ist, das Motordrehmoment durch eine formschlüssige Verbindung zwischen Motor und Getriebe übertragen wird. Eine derartige Durchschaltkupplung wird beispielsweise durch die WO 2006/110945 A1 offenbart.

Durchschaltkupplungen haben den großen Vorteil, dass der Reibteil der Kupplung nur für das für die Anfahrvorgänge benötigte Drehmoment ausgelegt werden muss und nicht für das maximale Motordrehmoment zuzüglich der üblichen Sicherheitsfaktoren, da die Drehmomentübertragung im normalen Fahrbetrieb formschlüssig erfolgt.

Während der Fahrt können diese Kupplungen wie konventionelle Kupplungen zur Durchführung von Schaltungen über den reibschlüssigen Teil der Kupplung geöffnet und geschlossen werden. Die formschlüssige Verbindung wird erst dann durchgeschaltet, wenn der Synchronisiervorgang zwischen Motordrehzahl und Getriebeeingangsdrehzahl nach einer Schaltung durch den Reibteil der Kupplung abgeschlossen ist.

Der vorliegenden Erfindung liegt die Aufgabe zu Grunde, ein Verfahren der eingangs beschriebenen Gattung vorzuschlagen, mit dem komfortoptimierte Schaltvorgänge bezogen auf die Ansteuerung auf einfachste Weise realisierbar sind, möglichst ohne dass die regelungstechnisch schwer beherrschbare reibschlüssige Verbindung der Kupplung verwendet wird.

Diese Aufgabe wird erfindungsgemäß durch die Merkmale des Patentanspruches 1 gelöst, wobei sich weitere vorteilhafte Ausgestaltungen aus den Unteransprüchen ergeben.

Demnach wird ein Verfahren zum Ansteuern einer Durchschaltkupplung eines Fahrzeuges vorgeschlagen, bei dem ein formschlüssiger Teil der Kupplung bei nahezu Drehmomentfreiheit im Antriebsstrang geöffnet, anschließend die Schaltung durchgeführt und nach der Schaltung die Kupplung wieder geschlossen wird. Erfindungsgemäß ist dazu vorgesehen, dass das über die formschlüssige Verbindung der Kupplung übertragene Drehmoment über eine Motorsteuerung beeinflusst wird, um eine Drehmomentfreiheit an der formschlüssigen Verbindung der Kupplung zu erreichen, wobei vor dem Erreichen der Drehmomentfreiheit die formschlüssige Verbindung vorgespannt wird und die formschlüssige Verbindung erst beim Erreichen der Drehmomentfreiheit sofort getrennt wird.

Somit erfolgt die Trennung der Durchschaltkupplung bzw. des Antriebstranges über die formschlüssige Verbindung der Kupplung bei einem sehr geringen Restdrehmoment im Antriebsstrang. Der Drehmomentabbau erfolgt dabei über die Motorbeeinflussung, wobei die formschlüssige Verbindung der Kupplung mit einer Ausschaltkraft vorgespannt wird. Diese Ausschaltkraft ist so dimensioniert, dass erst beim Erreichen der Drehmomentfreiheit die Reibung in der formschlüssigen Verbindung überwunden werden kann, wodurch dann die Kupplung sofort getrennt wird.

Mit dem erfindungsgemäßen Verfahren kann die Durchführung eines Schaltvorganges ohne bzw. nahezu ohne Belastung einer reibschlüssigen Koppelvorrichtung bzw. einer Reibungskupplung realisiert werden, um dadurch eine thermische Belastung der Kupplung zu vermeiden und die Ansteuerung zu vereinfachen. Durch die ausschließliche Verwendung der formschlüssigen Verbindung zur Drehmomentübertragung kann ein höchst mögliches über die Durchschaltkupplung übertragbares Drehmoment realisiert werden, wobei die Abmessungen der Kupplung aufgrund der verwendeten formschlüssigen Verbindung geringer ausfallen können. Bei dem erfindungsgemäßen Verfahren wird somit das Öffnen und Schließen direkt, das heißt, nur mit der formschlüssigen, mechanischen Verbindung der Kupplung realisiert.

Das Schließen der formschlüssigen Verbindung der Durchschaltkupplung erfordert nur eine Drehzahlgleichheit zwischen den zu verbindenden Bauteilen und die richtige Position der Bauteile zueinander, welches zum Beispiel durch im Fahrzeug vorgesehene Sensoren sicher erfasst und entsprechend eingestellt werden kann. Bei dem Öffnen beziehungsweise dem Trennen der formschlüssigen Verbindung beziehungsweise beim Öffnen der Kupplung ist eine Drehmomentfreiheit zwischen den verbundenen Bauteilen erforderlich.

Um dies nun besonders schnell und einfach durchführen zu können, werden bei dem vorgeschlagenen Verfahren geeignete Maßnahmen bei noch bestehender Verbindung zwischen den Bauteilen vorgesehen. Als Maßnahme kann z. B. das Vorspannen des Trennungsmechanismus vorgesehen werden, wobei die Vorspannung zum Beispiel mit einer Kraft erfolgt, die so bemessen ist, dass bei noch anliegendem Drehmoment zwischen den Bauteilen gerade noch eine Verbindung besteht. Wenn aus dem Drehmoment aufgrund des Nulldurchganges keine Haltekraft zwischen den Bauteilen mehr resultiert, kann automatisch eine Trennung der Bauteile bewirkt werden. In vorteilhafter Weise erfolgt somit das Öffnen der formschlüssigen Verbindung ohne dass der reibschlüssige Teil der Durchschaltkupplung eingesetzt wird.

Im Rahmen des vorgeschlagenen Verfahrens kann das Trennen der formschlüssigen Verbindung dadurch realisiert werden, dass das übertragene Drehmoment an der formschlüssigen Verbindung der Kupplung je nach Fahrzustand erhöht oder reduziert wird, so dass der geforderte Nulldurchgang bei dem Drehmomentverlauf bei bestehender formschlüssigen Verbindung der Kupplung durchschritten wird. Durch diese Beeinflussung des Motordrehmoments beziehungsweise des von der Kupplung übertragenen Drehmomentes kann das Durchschreiten der Drehmomentfreiheit realisiert werden, welches für die erfindungsgemäße Trennung der formschlüssigen Verbindung erforderlich ist.

Durch die Trennung des Antriebsstranges nur mit der erfindungsgemäßen Ansteuerung des mechanischen Teils beziehungsweise der formschlüssigen Verbindung der Durchschaltkupplung kann der Antriebsstrang in viel kürzerer Zeit getrennt werden, als das mit einer konventionellen Kupplung beziehungsweise mit dem reibschlüssigen Teil der Kupplung realisierbar ist. Dadurch reicht auch ein schnelles Durchfahren des Punktes der Drehmomentfreiheit bei dem erfindungsgemäßen Verfahren aus.

Gemäß einer nächsten Weiterbildung der Erfindung kann vorgesehen sein, dass die verbundenen Bauteile der formschlüssigen Verbindung beispielsweise durch eine pneumatische, hydraulische oder elektrische Kraft vorgespannt werden und ebenfalls pneumatisch, hydraulisch oder elektrisch bei Erreichen des Nulldurchganges im Drehmomentverlauf voneinander getrennt werden. Beispielsweise kann dies durch Beaufschlagen eines Schaltzylinders des Trennungsmechanismus realisiert werden. Durch das Beaufschlagen vor der Drehmomentfreiheit ist der Schaltzylinder bereits vorgespannt und wenn die Reibung zum Beispiel an der als Klauenverbindung ausgeführten formschlüssigen Verbindung einen kleineren Wert als eine konstruktiv bestimmbare Größe annimmt, erfolgt ein sehr schnelles und qualitativ sehr gutes Trennen der Verbindung beziehungsweise der Kupplung durch die vollständige Beaufschlagung des Schaltzylinders.

Um nach erfolgter Schaltung auch das Schließen der formschlüssigen Verbindungen möglichst ohne Belastung des reibschlüssigen Teils der Kupplung realisieren zu können, wird eine Drehzahlgleichheit zwischen den zu verbindenden Bauteilen der formschlüssigen Verbindung realisiert und die Kupplung bei korrekter Ausrichtung der Bauteile wieder geschlossen, um den Schaltvorgang zu beenden.

## Patentansprüche

1. Ansteuerverfahren einer Durchschaltkupplung eines Fahrzeugs, die während einer Rutschphase als Reibungskupplung ausgeführt ist und in Phasen in denen ein Rutschen der Kupplung nicht gewünscht ist, das Motordrehmoment durch eine formschlüssige Verbindung zwischen Motor und Getriebe übertragen wird, bei welchem Ansteuerverfahren der formschlüssige Teil der Durchschaltkupplung bei nahezu Drehmomentfreiheit im Antriebsstrang geöffnet, anschließend eine Schaltung durchgeführt und nach der Schaltung die Durchschaltkupplung wieder geschlossen wird, **dadurch gekennzeichnet, dass** ein über die formschlüssige Verbindung der Durchschaltkupplung übertragenes Drehmoment über eine Motorsteuerung derart beeinflusst wird, dass an der formschlüssigen Verbindung der Durchschaltkupplung eine Drehmomentfreiheit erreicht wird und die formschlüssige Verbindung der Durchschaltkupplung vor dem Erreichen der Drehmomentfreiheit mit einer Ausschaltkraft vorgespannt und beim Erreichen der Drehmomentfreiheit sofort getrennt wird.

2. Verfahren nach Anspruch 1, **dadurch gekennzeichnet, dass** das übertragene Drehmoment an der formschlüssigen Verbindung der Kupplung je nach Fahrzustand erhöht oder reduziert wird, so dass ein Nulldurchgang bei dem Drehmomentverlauf bei bestehender formschlüssiger Verbindung der Kupplung durchschritten wird.

3. Verfahren nach Anspruch 1 oder 2, **dadurch gekennzeichnet, dass** die verbundenen Bauteile der formschlüssigen Verbindung pneumatisch, hydraulisch oder elektrisch vorgespannt werden und bei Erreichen des Nulldurchganges bei dem Drehmomentverlauf voneinander getrennt werden.

4. Verfahren nach einem der vorangehenden Ansprüche, **dadurch gekennzeichnet, dass** nach der Schaltung zum Schließen der formschlüssigen Verbindung der Kupplung eine Drehzahlgleichheit zwischen den zu verbindenden Bauteilen der formschlüssigen Verbindung realisiert wird und dass die formschlüssige Verbindung bei korrekter Ausrichtung der Bauteile geschlossen wird.

## Claims

1. Method for actuating a clutch of a vehicle, which clutch is embodied as a friction clutch during a slipping phase, and in phases in which slipping of the clutch is not desired the engine torque is transmitted by a positively locking connection between the engine and the transmission, in which actuation method the positively locking part of the clutch is opened when the drive train is virtually free torque, from subsequently a gear shift operation is carried out, and after the gear shift operation the clutch is closed again, **characterized in that** a torque which is transmitted via the positively locking connection of the clutch is influenced by means of an engine controller in such a way that freedom from torque is brought about at the positively locking connection of the clutch and the positively locking connection of the clutch is prestressed with a switch-off force before the freedom from torque is reached, and when the freedom from torque is reached it is disconnected immediately.

2. Method according to Claim 1, **characterized in that** the transmitted torque is increased or reduced at the positively locking connection of the clutch depending on the driving state, with the result that a zero crossover on the torque profile is passed through when there is a positively locking connection of the clutch.

3. Method according to Claim 1 or 2, **characterized in that** the connected components of the positively locking connection are prestressed pneumatically, hydraulically or electrically, and when the zero crossover is reached on the torque profile they are disconnected from one another.

4. Method according to one of the preceding claims, **characterized in that** after the gear shift operation to close the positively locking connection of the clutch, equality of rotational speed is brought about between the components of the positively locking connection which are to be connected, and **in that** the positively locking connection is closed when the components are correctly oriented.

## Revendications

1. Procédé de commande d'un embrayage de changement de vitesses d'un véhicule, qui est réalisé pendant une phase de glissement sous forme d'embrayage à friction, et dans des phases dans lesquelles un glissement de l'embrayage n'est pas souhaitable, le couple moteur étant transmis par une liaison par engagement positif entre le moteur et la transmission, dans lequel procédé de commande la partie de l'embrayage de changement de vitesses à engagement positif s'ouvre en cas de quasi-absence de couple dans la chaîne cinématique, puis un changement de vitesses est réalisé et après le changement de vitesses, l'embrayage de changement de vitesses est à nouveau fermé, **caractérisé en ce qu'**un couple transmis par le biais de la connexion par engagement positif de l'embrayage de changement de vitesses est influencé par le biais d'une commande de moteur de telle sorte qu'au niveau de la connexion par engagement positif de l'embrayage de changement de vitesses, une absence de couple soit obtenue et que la connexion par engagement positif de l'embrayage de changement de vitesses soit précontrainte avant l'obtention de l'absence de couple par une force de déconnexion et soit immédiatement séparée une fois l'absence de couple obtenue.

2. Procédé selon la revendication 1, **caractérisé en ce que** le couple transmis au niveau de la connexion par engagement positif de l'embrayage est augmenté ou réduit en fonction de l'état de conduite, de telle sorte que la courbe du couple passe par zéro en cas de connexion existante de l'embrayage par engagement positif.

3. Procédé selon la revendication 1 ou 2, **caractérisé en ce que** les composants connectés de la connexion par engagement positif sont précontraints de manière pneumatique, hydraulique ou électrique, et sont séparés les uns des autres lors du passage par zéro de la courbe du couple.

4. Procédé selon l'une quelconque des revendications précédentes, **caractérisé en ce qu'**après le changement de vitesses, pour fermer la connexion par engagement positif de l'embrayage, on réalise une égalité de régimes entre les composants à connecter de la connexion par engagement positif et **en ce que** la connexion par engagement positif est fermée une fois les composants correctement alignés.
